# EUROPÄISCHE PATENTSCHRIFT

(11) **EP 1 802 491 B1**
(45) Veröffentlichungstag und Bekanntmachung des Hinweises auf die Patenterteilung: **06.08.2008**
(21) Anmeldenummer: 05794699.8
(22) Anmeldetag: 26.09.2005
(51) Int. Cl.: B60R 16/02, H04N 9/82, H04N 5/60, B60R 11/02

(54) **VORRICHTUNG UND VERFAHREN ZUM WIEDERGEBEN VON MULTIMEDIADATEN IN EINEM KRAFTFAHRZEUG**
PROCESS AND DEVICE FOR PLAYING BACK MULTIMEDIA DATA IN A MOTOR VEHICLE
DISPOSITIF ET PROCEDE POUR RESTITUER DES DONNEES MULTIMEDIA DANS UNE AUTOMOBILE

(30) Priorität: 22.10.2004 DE 102004051599
(43) Veröffentlichungstag der Anmeldung: 04.07.2007
(73) Patentinhaber: Continental Automotive GmbH, 30165 Hannover (DE)
(72) Erfinder: HAMPERL, Helmut, 93413 Cham (DE); LINDENTHAL, Andreas, 81247 München (DE)
(86) Internationale Anmeldenummer: PCT/EP2005/054805
(87) Internationale Veröffentlichungsnummer: WO 2006/045679

(56) Entgegenhaltungen:
- US-B1- 6 483 428
- PATENT ABSTRACTS OF JAPAN Bd. 2003, Nr. 12, 5. Dezember 2003 (2003-12-05) & JP 2004 007423 A (ALPINE ELECTRONICS INC), 8. Januar 2004 (2004-01-08) & US 2004/234242 A1 (AKITA KOJI ET AL) 25. November 2004 (2004-11-25)

## Beschreibung

Die Erfindung betrifft eine Vorrichtung und ein Verfahren zum Wiedergeben von Multimediadaten in einem Kraftfahrzeug nach dem Oberbegriff von Anspruch 1 bzw. 8. Eine derartige Vorrichtung bzw. ein derartiges Verfahren ist aus der JP 2004007423 A bekannt.

Die Wiedergabe von Multimediadaten findet heute in Kraftfahrzeugen eine immer breitere Anwendung. So ist aus der DE-19853665-A1 beispielsweise ein Fahrzeugkommunikationssystem bekannt, bei dem mehrere unterschiedliche Datenquellen sowie mehrere unterschiedliche Bedienplätze mit einer Recheneinheit verbunden sind, wobei zu den Datenquellen unter anderem ein Wiedergabegerät für DVD und CD sowie ein Tuner zum Empfang von Fernsehsignalen gehören. Eine zentrale Systemsteuerung räumt den Bedienplätzen individuelle und unterschiedliche Zugriffsrechte auf die Datenquellen und die damit verbundenen Applikationen ein. Für den Bedienplatz des Fahrzeugführers bedeutet dies unter anderem, dass ihm ein Zugriffsrecht auf einen Fernsehempfänger völlig bzw, nur während der Fahrt verweigert werden kann.

Auf diese Weise wird den gesetzlichen Bestimmungen entsprochen, die festlegen, dass aus Gründen der sicherheit in einem fahrenden Fahrzeug keine bewegten Bilder dargestellt werden dürfen. In Deutschland gilt momentan ein Fahrzeug ab einer Geschwindigkeit von 6 km/h als fahrend. Der fahrende Zustand eines Fahrzeugs wird im Folgenden als Fahrtzustand bezeichnet und das Gegenteil davon, also wenn sich das Fahrzeug mit einer Geschwindigkeit unterhalb einer Grenzgeschwindigkeit bewegt oder wenn es steht, als Nicht-Fahrtzustand.

Auf den heute bekannten DVD als Datenträger für Multimediadaten sind digitale Audio- und Videodaten gemeinsam abgelegt, wobei die Audiodaten und die Videodaten jeweils aus mehreren Datenströmen bestehen. Zur Abspeicherung auf einer DVD werden die ursprünglich getrennt vorliegenden Audiodatenströme und Videodatenströme miteinander gemultiplext. Beim Abspielen der DVD wird demzufolge ein einziger gemultiplexter Audio-Video-Datenstrom aus der DVD ausgelesen, der bei der Weiterverarbeitung wieder in die Audio- und Video-Anteile zerlegt und den jeweiligen akustischen bzw. grafischen Ausgabeeinheiten zugeführt wird.

Zu den auf der DVD abgelegten Videodaten gehören heute üblicherweise die eigentlichen Videobilddaten, also die bewegten Bilder, sowie Menüdaten. Unter Menüdaten versteht man die digitale Repräsentation einer Benutzeroberfläche, wobei in der Benutzeroberfläche neben einer Bedienstruktur unter anderem ein oder mehrere Inhaltsverzeichnisse zu den auf der DVD enthaltenen Filmen, Musiktiteln oder Videos sowie verschiedene Einstell- und Auswahlmöglichkeiten zu Wiedergabeoptionen eingebettet sei können.

Bei heutigen Multimedia-Wiedergabegeräten in Kraftfahrzeugen wird zur Einhaltung der gesetzlichen Bestimmungen die grafische Ausgabe jeglicher Videodaten oberhalb einer Grenzgeschwindigkeit unterbunden. Neben der Nichtanzeige der bewegten Videobilder führt dies auch zur Unterdrückung der Anzeige der Benutzeroberfläche der DVD. Handelt es sich bei den auf der DVD gespeicherten Daten unter anderem um Musiktitel in Verbindung mit Musikvideos, so entfällt aufgrund der Unterdrückung der Benutzeroberfläche auch die Möglichkeit der Auswahl eines gewünschten Musiktitels aus einem Inhaltsverzeichnis, obwohl die Bedienung akustischer Wiedergabegeräte beim fahrenden Fahrzeug erlaubt ist. Die Audiodaten der DVD können nur noch in der abgespeicherten Reihenfolge wiedergegeben werden.

Aufgabe der vorliegenden Erfindung ist es, eine Vorrichtung und ein Verfahren zum Wiedergeben von Multimediadaten in einem Kraftfahrzeug anzugeben, mit denen eine Bedienung eines Multimedia-Wiedergabegerätes auch bei fahrendem Fahrzeug möglich ist.

Diese Aufgabe wird mit einer Vorrichtung nach Anspruch 1 und mit einem Verfahren nach Anspruch 8 gelöst.

Eine erfindungsgemäße Vorrichtung zum Wiedergeben von Multimediadaten in einem Kraftfahrzeug enthält eine Einleseeinheit zum Einlesen eines digitalen gemultiplexten Audio-Video-Datenstroms von einem Multimediadatenträger, wobei in dem Audio-Video-Datenstrom Audiodaten, Videobilddaten und Menüdaten enthalten sind, eine mit der Einleseeinheit verbundene Demultiplexeinheit zur Erzeugung eines jeweils getrennten Audiodatenstroms, Videobilddatenstroms und Menüdatenstroms aus dem Audio-Video-Datenstrom, eine mit der Demultiplexeinheit verbundene akustische Umwandlungseinheit zur Umwandlung des Audiodatenstroms in ein akustisch ausgebbares Audiosignal, eine mit der Demultiplexeinheit verbundene Zusammenführungseinheit zum Zusammenführen des Videobilddatenstroms und des Menüdatenstroms zu einem digitalen Grafikdatenstrom, wobei die Zusammenführungseinheit bei Vorliegen des Fahrtzustandes des Kraftfahrzeugs den Videobilddatenstrom ausblendet, eine mit der Zusammenführungseinheit verbundene grafische Umwandlungseinheit zur Umwandlung des Grafikdatenstroms in ein grafisch ausgebbares Grafiksignal, eine mit der akustischen Umwandlungseinheit verbundene akustischen Ausgabeeinheit zur Ausgabe des Audiosignals, und eine mit der grafischen Umwandlungseinheit verbundene grafischen Ausgabeeinheit zur Ausgabe des Grafiksignals.

Zu einem erfindungsgemäßen Verfahren zum Wiedergeben von Multimediadaten in einem Kraftfahrzeug gehören folgende Schritte: ein digitaler gemultiplexter Audio-Video-Datenstrom wird von einem Multimediadatenträger eingelesen, wobei in dem Audio-Video-Datenstrom Audiodaten, Videobilddaten und Menüdaten enthalten sind; der Audio-Video-Datenstrom wird zur Erzeugung eines jeweils getrennten Audiodatenstroms, Videobilddatenstroms und Menüdatenstroms demultiplext; der Audiodatenstroms wird in ein akustisch ausgebbares Audiosignal umgewandelt; der Videobilddatenstrom und der Menüdatenstrom werden zu einem digitalen Grafikdatenstrom zusammengeführt, wobei bei Feststellung des Fahrtzustandes des Kraftfahrzeugs der Videobilddatenstrom ausgeblendet wird; der Grafikdatenstrom wird in ein grafisch ausgebbares Grafiksignal umgewandelt; das Audiosignal wird auf einer akustischen und das Grafiksignal auf einer grafischen Ausgabeeinheit ausgegeben.

Wesentlich bei der Erfindung ist die Überlegung, nicht mehr den gesamten, aus zusammengeführtem Videobilddatenstrom und Menüdatenstrom bestehenden Grafikdatenstrom bei Vorliegen des Fahrtzustandes des Kraftfahrzeuges zu unterdrücken, sondern lediglich den aus der Demultiplexeinheit gewonnenen Videobilddatenstrom bei Bedarf auszublenden. Auf diese Weise können die Menüdaten unverändert angezeigt und zur Bedienung des Audio-Anteils des Multimediadatenträgers verwendet werden. Einem Fahrzeugführer wird damit der Bedienkomfort des Multimediadatenträgers zu jeder Zeit zur Verfügung gestellt, unabhängig davon, ob gerade bewegte Bilder unterdrückt werden müssen oder nicht.

Bevorzugt blendet die Zusammenführungseinheit bei Vorliegen des Nicht-Fahrtzustandes des Kraftfahrzeugs den Videobilddatenstrom wieder ein. Ein Betrachten von bewegten Bildern wird also automatisch wieder möglich, sobald das Fahrzeug nicht mehr fährt, ohne dass vom Bediener des Multimedia-Wiedergabegerätes bestimmte Eingaben erforderlich sind.

In einer weiteren bevorzugten Ausführung enthält der Menüdatenstrom die Daten einer grafischen Benutzeroberfläche. Im Gegensatz zu den von herkömmlichen CD bekannten Inhaltsverzeichnissen, die in Form von navigierbaren Listen vorliegen, erlaubt eine Benutzeroberfläche eine deutliche Verbesserung des Bedienkomforts. Die Audiodaten und Videodaten können beispielsweise unterschiedlich kenntlich gemacht und mit Zusatzinformationen versehen werden.

Dabei ist es vorteilhaft, wenn die Benutzeroberfläche ein Navigieren durch und eine Auswahl von auf dem Multimediadatenträger enthaltenen Audiodaten. Die derart ausgestaltete Erfindung ermöglicht beim Abspielen eines Musiktitel und Musikvideos enthaltenden Multimediadatenträgers im Nicht-Fahrtzustand des Fahrzeugs eine grafische Ausgabe eines der Musikvideos zeitgleich mit dem Abspielen des zugehörigen Musiktitels und im Fahrtzustand ein Ausblenden des Musikvideos, während es dem Fahrzeugführer uneingeschränkt möglich bleibt, zwischen den Musiktiteln zu navigieren und gezielt einen Musiktitel anzuwählen. Zusätzlich kann er bei entsprechender Ausgestaltung der Benutzeroberfläche bestimmte Wiedergabeoptionen einstellen oder sich Zusatzinformationen zu den Musiktiteln anzeigen lassen.

In einer weiteren Ausgestaltung der Erfindung ist die Zusammenführungseinheit mit einer Überwachungseinheit verbunden, die der Zusammenführungseinheit den Fahrtzustand in dem Moment signalisiert, in dem das Kraftfahrzeug eine vorgegebene Grenzgeschwindigkeit überschreitet, und die einen Nicht-Fahrtzustand signalisiert, wenn das Fahrzeug die vorgegebene Grenzgeschwindigkeit unterschreitet.
Alternativ dazu könnte der Fahrt- oder Nicht-Fahrtzustand auch aufgrund anderer Sensorinformationen festgestellt werden, wie beispielsweise anhand von Raddrehzahlen oder Positionsinformationen oder anhand von bewegten Bildern einer On-Board-Kamera. Sofern die Information über den Fahrtzustand auch von anderen Systemen innerhalb des Fahrzeugs benötigt wird, kann sie auf einem Fahrzeug-Datenbus zur Verfügung gestellt werden. Neben einer externen, also nicht direkt zur Vorrichtung zum Wiedergeben von Multimediadaten bzw. zur Zusammenführungseinheit gehörenden Einheit, kann auch die Zusammenführungseinheit selbst den Fahrt- bzw. Nichtfahrtzustand detektieren, indem sie selbst die entsprechende Sensorinformation auswertet.

In der genannten Ausführung der Überwachungseinheit wird lediglich ein Über- und Unterschreiten einer einzigen Grenzgeschwindigkeit festgestellt. Alternativ können auch zwei unterschiedliche Grenzwerte festgelegt werden, um eine Art Hysterese zuzulassen und ein ständiges Aus- und Einblenden der Videobilder bei einer Langsamfahrt im Bereich der einzigen Grenzgeschwindigkeit zu vermeiden.

In einer weiteren Ausgestaltung ist vorgesehen, dass das Wiedereinblenden des Videobilddatenstroms im Nicht-Fahrtzustand abschaltbar ausgeführt ist. Dies ist insbesondere im Fall des Stop-and-Go oder beispielsweise bei Lieferfahrzeugen von Vorteil, wenn ein ständiger Wechsel zwischen Fahrt- und Nicht-fahrtzustand vorliegt.

In einer speziellen Ausgestaltung ist der Multimediadatenträger eine DVD. Die Erfindung ist jedoch auch auf jedweden anderen Datenträger von gemultiplexten Audio-, Video- und Menüdaten anwendbar.

Die Erfindung wird nachfolgend anhand eines Ausführungsbeispiels und der Zeichnung näher erläutert. Es zeigen:
- Fig. 1: eine erfindungsgemäße Vorrichtung zum Wiedergeben von Multimediadaten;
- Fig. 2: eine Vorrichtung zum Abspielen von DVD oder CD.

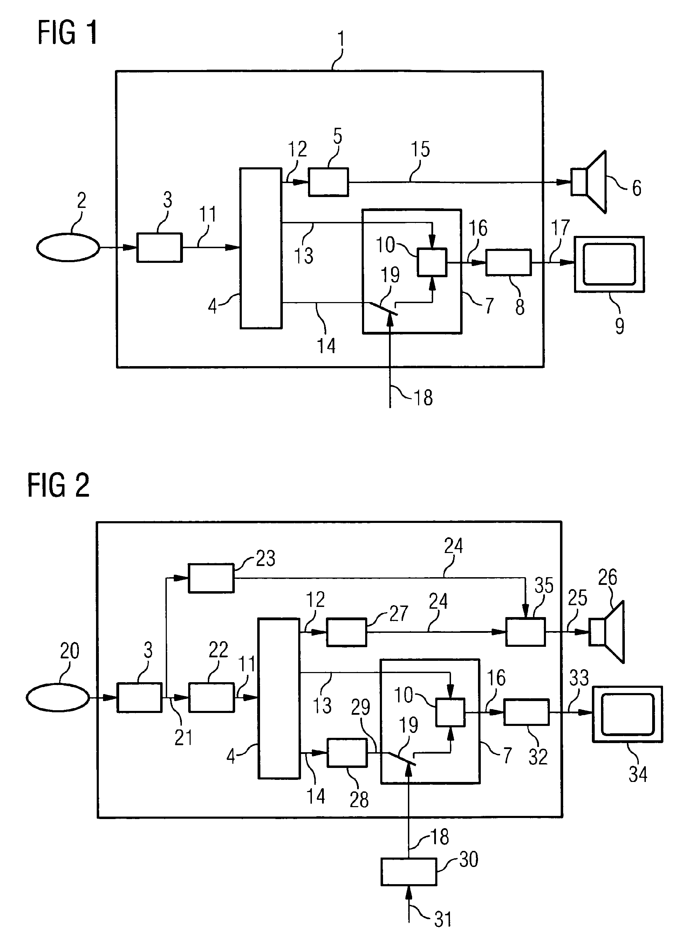

Figur 1 zeigt eine Vorrichtung 1 zum Wiedergeben von Multimediadaten in einem Kraftfahrzeug. Eine Einleseeinheit 3 liest von einem Multimediadatenträger 2 einen digitalen gemultiplexten Audio-Video-Datenstrom 11 ein und gibt ihn an eine Demultiplexeinheit 4 aus, die den Audio-Video-Datenstrom 11 in einen Audiodatenstrom 12, einen Videobilddatenstrom 14 und einen Menüdatenstrom 13 auftrennt. Der Audiodatenstrom 12 wird von einer akustischen Umwandlungseinheit 5 in ein akustisch ausgebbares Audiosignal 15 umgewandelt, welches auf der akustischen Ausgabeeinheit 6 ausgegeben wird. Der Videobilddatenstrom 14 und der Menüdatenstrom 13 werden einer Zusammenführungseinheit 7 zugeführt. In die Zusammenführungseinheit 7 geht des weiteren ein Signal 18 über den Fahrt- oder Nicht-Fahrtzustand des Kraftfahrzeugs ein, welches von einem Datenbus, beispielsweise einem MOST-Bus, in die Vorrichtung 1 eingelesen wird. Liegt der Nicht-Fahrtzustand vor, so ist ein Schalter 19 geschlossen und der Videobilddatenstrom 14 wird in einer Mischeinheit 10 mit dem Menüdatenstrom 13 zu einem digitalen Grafikdatenstrom 16 zusammengeführt. Liegt dagegen der Fahrtzustand vor, so öffnet der Schalter 19 und das Ausgangssignal der Mischeinheit 10, also der Grafikdatenstrom 16, besteht einzig aus dem Menüdatenstrom 13. Der Grafikdatenstrom 16 wird in einer grafischen Umwandlungseinheit 8 in ein grafisch ausgebbares Grafiksignal 17 umgewandelt und auf einer grafischen Ausgabeeinheit 9 ausgegeben.

In Figur 2 ist eine Vorrichtung zur Wiedergabe von Multimediadaten einer CD oder DVD. Die CD oder DVD, also der Datenträger 20, wird von der Einleseeinheit 3 optisch abgetastet und die eingelesenen Signale werden vorverstärkt. Je nach Art des Datenträgers werden die eingelesenen Daten 21 einem DVD-Datenprozessor 22 oder einem CD-Datenprozessor 23 zugeführt, wo sie entsprechend demoduliert und fehlerbereinigt werden. Das Ausgangssignal des CD-Datenprozessors 23 enthält digitale Audiodaten in einem Audio-Datenformat 24, die einer akustischen Umwandlungseinheit 35 zugeführt werden. Die Umwandlungseinheit 35 ist in dem dargestellten Fall ein Digital-Analog-Wandler zur Erzeugung analoger Audiosignale 25. Die analogen Audiosignale 25 werden auf einem Lautsprecher 26 ausgegeben. Alternativ kann die Umwandlungseinheit 35 auch ein Digitales-Audio-Interface zur Transformation des Audiodatenstroms in ein anderes, auf einer akustischen Ausgabeeinheit ausgebbares, digitales Audio-Datenformat sein, beispielsweise zur Ansteuerung einer Dolby-Surround-Anlage.

Aus dem DVD-Datenprozessor 23 wird ein gemultiplexter Audio-Video-Datenstrom 11 aus- und an eine Demultiplexeinheit 4 weitergegeben. Die Demultiplexeinheit 4 zerlegt den Audio-Video-Datenstrom in einen Audiodatenstrom 12, einen Menüdatenstrom 13 und einen Videodatenstrom 14. Der Audiodatenstrom 12 wird an eine Audio-Dekodiereinheit 27 weitergeleitet, die den Audiodatenstrom 12 beispielsweise aus einem MPEG-Audioformat oder einem Dolby-Digital-Audioformat in das Audio-Datenformat 24 umwandelt. Über die akustische Umwandlungseinheit 35 werden die Audiodaten 24 in auf dem Lautsprecher 26 ausgebbare, analoge Audiosignale 25 transformiert. Der Videodatenstrom 14 wird in einer Video-Dekodiereinheit 28 beispielsweise aus einem MPEG-Videoformat in ein anderes, digitales Video-Datenformat 29 entkomprimiert und der bereits beschriebenen Zusammenführungseinheit 7 zugeleitet. Die Zusammenführungseinheit 7 erhält von einer Überwachungseinheit 30 das Signal 18 über den Fahrt- bzw. Nicht-Fahrtzustand, wobei die Überwachungseinheit 30 das Geschwindigkeitssignal 31 hinsichtlich des Über- bzw. Unterschreitens einer Grenzgeschwindigkeit von 6 km/h auswertet, und beim Überschreiten den Fahrtzustand ausgibt und beim Unterschreiten den Nicht-Fahrtzustand. Der aus der Mischeinheit 10 ausgegebene Grafikdatenstrom 16 wird über eine grafische Umwandlungseinheit 32 in ein digitales Grafiksignal 33 zur Ausgabe auf einem Grafikbildschirm 34 umgewandelt und auf dem Grafikbildschirm 34 angezeigt.

## Patentansprüche

1. Vorrichtung (1) zum Wiedergeben von Multimediadaten in einem Kraftfahrzeug mit:
- einer Einleseeinheit (3) zum Einlesen eines digitalen gemultiplexten Audio-Video-Datenstroms (11) von einem Multimediadatenträger (2, 20), wobei in dem Audio-Video-Datenstrom (11) Audiodaten, Videobilddaten und Menüdaten enthalten sind,
- einer mit der Einleseeinheit (3) verbundenen Demultiplexeinheit (4) zur Erzeugung eines jeweils getrennten Audiodatenstroms (12), Videobilddatenstroms (14) und Menüdatenstroms (13) aus dem Audio-Video-Datenstrom (11),
- einer mit der Demultiplexeinheit (4) verbundenen akustischen Umwandlungseinheit (5, 35) zur Umwandlung des Audiodatenstroms (12) in ein akustisch ausgebbares Audiosignal (15, 25),
- einer mit der Demultiplexeinheit (4) verbundenen Zusammenführungseinheit (7) zum Zusammenführen des Videobilddatenstroms (14) und des Menüdatenstroms (13) zu einem digitalen Grafikdatenstrom (16), wobei die Zusammenführungseinheit (7) bei Vorliegen des Fahrtzustandes (18) des Kraftfahrzeugs den Videobilddatenstrom (14) ausblendet,
- einer mit der Zusammenführungseinheit (7) verbundenen grafischen Umwandlungseinheit (8, 32) zur Umwandlung des Grafikdatenstroms (16) in ein grafisch ausgebbares Grafiksignal (17, 33),
- einer mit der akustischen Umwandlungseinheit (5, 35) verbundenen akustischen Ausgabeeinheit (6, 26) zur Ausgabe des Audiosignals (15, 25), und
- einer mit der grafischen Umwandlungseinheit (8, 32) verbundenen grafischen Ausgabeeinheit (9, 34) zur Ausgabe des Grafiksignals (17, 33),
**dadurch gekenntzeichnet, dass** die Zusammenführungseinheit (7) bei Vorliegen des Fahrtzustandes (18) des Kraftfahrzeugs lediglich den Videobilddatenstrom (14) und nicht den Menüdatenstrom (13) ausblendet.

2. Vorrichtung (1) nach Anspruch 1, **dadurch gekennzeichnet, dass** die Zusammenführungseinheit (7) bei Vorliegen des Nicht-Fahrtzustandes (18) des Kraftfahrzeugs den Videobilddatenstrom (14) wieder einblendet.

3. Vorrichtung (1) nach einem der vorhergehenden Ansprüche, **dadurch gekennzeichnet, dass** der Menüdatenstrom (13) die Daten einer grafischen Benutzeroberfläche enthält.

4. Vorrichtung (1) nach Anspruch 3, **dadurch gekennzeichnet, dass** die Benutzeroberfläche ein Navigieren durch und eine Auswahl von auf dem Multimediadatenträger (2, 20) enthaltenen Audiodaten ermöglicht.

5. Vorrichtung (1) nach einem der vorhergehenden Ansprüche, **dadurch gekennzeichnet, dass** die Zusammenführungseinheit (7) mit einer Überwachungseinheit (30) verbunden ist, die der Zusammenführungseinheit (7) den Fahrtzustand (18) in dem Moment signalisiert, in dem das Kraftfahrzeug eine vorgegebene Grenzgeschwindigkeit überschreitet, und die einen Nicht-Fahrtzustand (18) signalisiert, wenn das Kraftfahrzeug die vorgegebene Grenzgeschwindigkeit unterschreitet.

6. Vorrichtung (1) nach einem der vorhergehenden Ansprüche 2 bis 5, **dadurch gekennzeichnet, dass** das Wiedereinblenden des Videobilddatenstroms (14) im Nicht-Fahrtzustand (18) abschaltbar ausgeführt ist.

7. Vorrichtung (1) nach einem der vorhergehenden Ansprüche, **dadurch gekennzeichnet, dass** der Multimediadatenträger (2, 20) eine DVD ist.

8. Verfahren zum Wiedergeben von Multimediadaten in einem Kraftfahrzeug, mit den Schritten:
- Einlesen eines digitalen gemultiplexten Audio-Video-Datenstroms (11) von einem Multimediadatenträger (2, 20), wobei in dem Audio-Video-Datenstrom (11) Audiodaten, Videobilddaten und Menüdaten enthalten sind,
- Demultiplexen des Audio-Video-Datenstroms (11) zur Erzeugung eines jeweils getrennten Audiodatenstroms (12), Videobilddatenstroms (14) und Menüdatenstroms (13),
- Umwandeln des Audiodatenstroms (12) in ein akustisch ausgebbares Audiosignal (15, 25),
- Zusammenführen des Videobilddatenstroms (14) und des Menüdatenstroms (13) zu einem digitalen Grafikdatenstrom (16), wobei bei Vorliegen des Fahrtzustandes (18) des Kraftfahrzeugs der Videobilddatenstrom (14) ausgeblendet wird,
- Umwandeln des Grafikdatenstroms (16) in ein grafisch ausgebbares Grafiksignal (17, 33),
- Ausgeben des Audiosignals (15, 25) auf einer akustischen Ausgabeeinheit (6, 26) und des Grafiksignals (17, 33) auf einer grafischen Ausgabeeinheit (9, 34),
**dadurch gekennzeichnet, dass** bei Vorliegen des Fahrtzustandes (18) des Kraftfahrzeugs lediglich der Videobilddatenstrom (14), jedoch nicht der Menüdatenstrom (13) ausgeblendet wird.

## Claims

1. Apparatus (1) for reproducing multimedia data in a motor vehicle, having:
- a reading unit (3) for reading in a digital multiplexed audio-video data stream (11) from a multimedia data storage medium (2, 20), where the audio-video data stream (11) contains audio data, video picture data and menu data,
- a demultiplex unit (4), connected to the reading unit (3), for producing a respectively separate audio data stream (12), video picture data stream (14) and menu data stream (13) from the audio-video data stream (11),
- an audio conversion unit (5, 35), connected to the demultiplex unit (4), for converting the audio data stream (12) into an audibly outputtable audio signal (15, 25),
- a combining unit (7), connected to the demultiplex unit (4), for combining the video picture data stream (14) and the menu data stream (13) to form a digital graphics data stream (16), where the combining unit (7) fades out the video picture data stream (14) when the motor vehicle is in the driving state (18),
- a graphical conversion unit (8, 32), connected to the combining unit (7), for converting the graphics data stream (16) into a graphically outputtable graphics signal (17, 33),
- an audio output unit (6, 26), connected to the audio conversion unit (5, 35), for outputting the audio signal (15, 25), and
- a graphical output unit (9, 34), connected to the graphical conversion unit (8, 32), for outputting the graphics signal (17, 33),
**characterized in that** the combining unit (7) fades out just the video picture data stream (14) and not the menu data stream (13) when the motor vehicle is in the driving state (18).

2. Apparatus (1) according to Claim 1, **characterized in that** the combining unit (7) fades in the video picture data stream (14) again when the motor vehicle is in the non-driving state (18).

3. Apparatus (1) according to one of the preceding claims, **characterized in that** the menu data stream (13) contains the data from a graphical user interface.

4. Apparatus (1) according to Claim 3, **characterized in that** the user interface allows navigation through and selection of audio data held on the multimedia data storage medium (2, 20).

5. Apparatus (1) according to one of the preceding claims, **characterized in that** the combining unit (7) is connected to a monitoring unit (30) which signals the driving state (18) to the combining unit (7) at the moment at which the motor vehicle exceeds a prescribed limit speed and which signals a non-driving state (18) if the motor vehicle is below the prescribed limit speed.

6. Apparatus (1) according to one of the preceding Claims 2 to 5, **characterized in that** the fade-in of the video picture data stream (14) in the non-driving state (18) is designed to be able to be turned off.

7. Apparatus (1) according to one of the preceding claims, **characterized in that** the multimedia data storage medium (2, 20) is a DVD.

8. Method for reproducing multimedia data in a motor vehicle, having the following steps:
- a digital multiplexed audio-video data stream (11) is read in from a multimedia data storage medium (2, 20), where the audio-video data stream (11) contains audio data, video picture data and menu data,
- the audio-video data stream (11) is demultiplexed in order to produce a respectively separate audio data stream (12), video picture data stream (14) and menu data stream (13),
- the audio data stream (12) is converted into an audibly outputtable audio signal (15, 25),
- the video picture data stream (14) and the menu data stream (13) are combined to form a digital graphics data stream (16), where the video picture data stream (14) is faded out when the motor vehicle is in the driving state (18),
- the graphics data stream (16) is converted into a graphically outputtable graphics signal (17, 33),
- the audio signal (15, 25) is output on an audio output unit (6, 26) and the graphics signal (17, 33) is output on a graphical output unit (9, 34),
**characterized in that** when the motor vehicle is in the driving state (18) just the video picture data stream (14) but not the menu data stream (13) is faded out.

## Revendications

1. Dispositif (1) permettant de reproduire des données multimédia dans un véhicule automobile et comportant
- une unité de lecture (3) permettant de lire, sur un support (2, 20) de données multimédia, un flux de données (11) audio et vidéo numériques multiplexées, le flux de données (11) audio et vidéo renfermant des données audio, des données d'images vidéo et des données relatives aux menus,
- une unité de démultiplexage (4) reliée à l'unité de lecture (3) et permettant de générer, à partir du flux de données (11) audio et vidéo, séparément l'un de l'autre, un flux de données audio (12), un flux de données d'images vidéo (14) et un flux de données relatives aux menus (13),
- une unité de conversion acoustique (5, 35) reliée à l'unité de démultiplexage (4) et permettant de convertir le flux de données audio (12) en un signal audio (15, 25) pouvant être édité d'une façon acoustique,
- une unité d'assemblage (7) reliée à l'unité de démultiplexage (4) et permettant d'assembler le flux de données d'images vidéo (14) et le flux de données relatives aux menus (13) pour former un flux numérique de données graphiques (16), l'unité d'assemblage (7) masquant le flux de données d'images vidéo (14) lorsque le véhicule automobile se trouve dans l'état de marche (18),
- une unité de conversion graphique (8, 32) reliée à l'unité d'assemblage (7) et permettant de convertir le flux de données graphiques (16) en un signal graphique (17, 33) pouvant être édité d'une façon graphique,
- une unité d'édition acoustique (6, 26) reliée à l'unité de conversion acoustique (5, 35) et permettant d'éditer le signal audio (15, 25) et
- une unité d'édition graphique (9, 34) reliée à l'unité de conversion graphique (8, 32) et permettant d'éditer le signal graphique (17, 33),
**caractérisé par le fait que**, lorsque le véhicule automobile se trouve dans l'état de marche (18), l'unité d'assemblage (7) ne masque que le flux de données d'images vidéo (14) et pas le flux de données relatives aux menus (13).

2. Dispositif (1) selon la revendication 1, **caractérisé par le fait que**, lorsque le véhicule automobile ne se trouve pas dans l'état de marche (18), l'unité d'assemblage (7) affiche de nouveau le flux de données d'images vidéo (14).

3. Dispositif (1) selon l'une des revendications précédentes, **caractérisé par le fait que** le flux de données relatives aux menus (13) renferme les données d'une interface utilisateur graphique.

4. Dispositif (1) selon la revendication 3, **caractérisé par le fait que** l'interface utilisateur permet de naviguer à travers des données audio contenues sur le support de données multimédia (2, 20) et de sélectionner lesdites données.

5. Dispositif (1) selon l'une des revendications précédentes, **caractérisé par le fait que** l'unité d'assemblage (7) est reliée à une unité de contrôle (30) qui signale à l'unité d'assemblage (7) que le véhicule automobile se trouve dans l'état de marche (18) dès que le véhicule automobile dépasse une vitesse limite donnée et que le véhicule automobile ne se trouve pas dans l'état de marche (18) lorsque la vitesse du véhicule automobile est inférieure à la vitesse limite donnée.

6. Dispositif (1) selon l'une des revendications précédentes 2 à 5, **caractérisé par le fait que** le réaffichage du flux de données d'images vidéo (14) peut être interrompu quand le véhicule ne se trouve pas dans l'état de marche (18).

7. Dispositif (1) selon l'une des revendications précédentes, **caractérisé par le fait que** le support de données multimédia (2, 20) est un disque DVD.

8. Procédé permettant de reproduire des données multimédia dans un véhicule automobile, et comportant les phases suivantes:
- lecture, sur un support de données multimédia (2, 20), d'un flux de données (11) audio et vidéo numériques multiplexées le flux de données (11) audio et vidéo renfermant des données audio, des données d'images vidéo et des données relatives aux menus,
- démultiplexage du flux de données (11) audio et vidéo pour générer, séparément l'un de l'autre, un flux de données audio (12), un flux de données d'images vidéo (14) et un flux de données relatives aux menus (13),
- conversion du flux de données audio (12) en un signal audio (15, 25) pouvant être édité d'une façon acoustique,
- assemblage du flux de données d'images vidéo (14) et du flux de données relatives aux menus (13) pour former un flux de données graphiques (16), le flux de données d'images vidéo (14) étant masqué lorsque le véhicule automobile se trouve dans l'état de marche (18),
- conversion du flux de données graphiques (16) en un signal graphique (17, 33) pouvant être édité d'une façon graphique,
- édition du signal audio (15, 25) sur une unité acoustique d'édition (6, 26) et du signal graphique (17, 33) sur une unité graphique d'édition (9, 34),
**caractérisé par le fait que**, lorsque le véhicule automobile se trouve dans l'état de marche (18), seul le flux de données d'images vidéo (14) est masqué, mais pas le flux de données relatives aux menus (13).
